# EUROPEAN PATENT SPECIFICATION

(11) **EP 1 748 708 B1**
(45) Date of publication and mention of the grant of the patent: **08.04.2009**
(21) Application number: 05744797.1
(22) Date of filing: 11.05.2005
(51) Int. Cl.: A44B 11/25

(54) **A SAFETY-BELT TONGUE AND A SAFETY-BELT ARRANGEMENT**
SICHERHEITSGURTZUNGE UND SICHERHEITSGURTANORDNUNG
LANGUETTE DE CEINTURE DE SECURITE ET AGENCEMENT DE CEINTURE DE SECURITE

(30) Priority: 25.05.2004 GB 0411719
(43) Date of publication of application: 07.02.2007
(73) Proprietor: AUTOLIV DEVELOPMENT AB, 447 83 Vargarda (SE)
(72) Inventor: MAGNUSSON, Thomas, SE- 504 66 Borås (SE)
(74) Representative: Parry, Simon James
(86) International application number: PCT/SE2005/000675
(87) International publication number: WO 2005/115192

(56) References cited:
- GB-A- 2 085 709
- GB-A- 2 244 079
- US-A- 3 897 963
- US-A- 4 291 918
- US-A- 4 614 007
- US-A- 5 138 749
- US-A- 5 471 717
- US-A- 5 634 664
- US-A- 5 870 816
- US-A1- 2003 177 621

## Description

**THE PRESENT INVENTION** relates to a safety-belt tongue and also relates to a safety-belt arrangement incorporating the tongue.

It has been proposed previously to provide a so-called three-point safety-belt for use by the occupant of a vehicle in order to provide protection for the occupant in the event that an accident should occur.

Such a three-point safety-belt includes a lap portion which extends across the lap of the seat occupant, and a diagonal portion which extends diagonally across the chest of the seat occupant, when the safety-belt is properly fastened.

Typically a safety-belt arrangement of this type incorporates a retractor which is usually mounted on the floor of a motor vehicle adjacent one side of the vehicle seat. The safety-belt has one end wound on to the retractor. The safety-belt extends from the retractor adjacent a door pillar of the vehicle to a pillar-loop deflector, comprising a plate defining a slot through which the safety-belt passes. The plate is pivotally connected to the structure of the motor vehicle, in the region of the door pillar.

The safety-belt extends, as the "diagonal" part of the arrangement, from the pillar-loop deflector to a tongue which is slidably mounted on the belt. The tongue may be releasably received within a buckle which is mounted on the side of the seat remote from the retractor. A further part of the belt extends from the tongue to an anchor point adjacent the retractor. This part of the belt forms the lap part of the safety-belt arrangement.

The retractor ordinarily freely pays-out safety-belt, to enable the safety-belt to be buckled into position by the seat occupant. When an accident occurs, the retractor is locked, for example, by an inertia mechanism, preventing further pay-out of the safety-belt. The safety-belt thus helps retain the seat occupant firmly in position within their seat in an accident situation.

It has been found, however, that in an accident situation, the upper torso of a seat occupant may tend to move forwardly, thus applying a very heavy force to the diagonal part of the safety-belt. This force cannot withdraw more safety-belt from the retractor, because, in the accident situation, the retractor becomes locked. However, this force can cause safety-belt from the lap portion of the safety-belt arrangement to slide through the tongue, thus effectively reducing the length of the lap portion of the safety-belt, but also increasing the length of the diagonal portion of the safety-belt. This increase in length will permit the torso of the seat occupant to move further forwardly before the safety-belt arrests the forward movement of the seat torso. This is clearly undesirable.

US Patent 5138749, US Patent 5471717 and US Patent 5634664 disclose safety belt tongues in which a safety belt passes through an aperture in the safety belt tongue and around a member which is slidable with respect to the tongue between a position in which the belt can run freely through the aperture and a position in which the slidable member clamps the belt against part of the tongue to restrain the belt from passing through the tongue.

US Patent 5870816 and US Patent 4291918, (and US Patent 5634664 in an alternative embodiment), disclose safety belt tongues in which a safety belt passes through an aperture in a safety belt tongue and around a member which is pivotably mounted in the tongue for pivoting between a position in which the belt can run freely through the belt tongue and a position in which the pivotable member clamps the belt against part of the tongue to restrain the belt from running through the tongue.

US Patent 4614007 and GB2085709 disclose pillar mounts for vehicle safety belts in which a safety belt passes between a frame of the pillar mount and a clamping member which is mounted for pivoting in the pillar mount but is normally held in a position in which the belt is free to pass between the frame and the clamping member and in which the clamping member is restrained from pivoting by a frangible pin, and wherein an excessive force applied to the belt will apply sufficient torque to the clamping member to break the pin and allow the clamping member to rotate to a position in which it clamps the belt in the frame.

The present invention seeks to provide an improved tongue for a safety-belt arrangement and an improved safety-belt arrangement incorporating the tongue.

According this invention there is provided a safety-belt tongue having a converging throat extending therethrough, said throat having an upper wall and a lower wall which converge and having two side walls, the safety belt tongue including a clamping element mounted within the throat and defining between the clamping element and one of said converging walls of the throat a passage through which a safety-belt may pass, characterised in that the clamping element is a substantially cylindrical element of a diameter greater than the least width of the converging throat, the ends of the clamping element being guided in recesses formed in said side walls, the clamping element being held in a position in said throat spaced from the part of the throat which is of least width by frangible trunnions received within boxes in the side walls of the throat whereby, in normal use, with the clamping element in said release position, such a safety-belt may pass freely through said passage, the cylindrical clamping element being movable towards the part of least width of said converging throat after fracture of said trunnions, so that the clamping element engages the safety belt and clamps the safety belt against part of the throat to prevent movement of the safety belt through the throat.

The invention also relates to a safety-belt arrangement incorporating a tongue as described above.

The safety-belt arrangement is preferably in the form of a lap-and-diagonal safety-belt arrangement, the tongue being oriented so that a predetermined force applied to the diagonal part of the safety-belt arrangement will apply a force to the clamping element moving the clamping element to the clamping position.

Alternatively the safety-belt arrangement is in the form of a lap-and-diagonal safety-belt arrangement, the tongue being oriented so that a predetermined force applied to the lap part of the safety-belt arrangement will apply a force to the clamping element moving the clamping element to the clamping position.

In order that the invention may be more readily understood, and so that further features thereof may be appreciated, embodiments of the invention will now be described, by way of example, with reference to the accompanying drawings in which:
FIGURE 1 is a diagrammatic perspective view of a safety-belt arrangement in accordance with the invention,
FIGURE 2 is a diagrammatic sectional view through one form of tongue for use with the safety-belt arrangement of Figure 1 with a clamping element omitted, in a release position,
FIGURE 3 is a view corresponding to Figure 2 but showing the clamping element and showing a length of safety-belt running through the tongue of Figure 2, FIGURE 3 showing the tongue in a release position, and
FIGURE 4 is a view corresponding to Figure 3 but showing the clamping element in a clamping position.

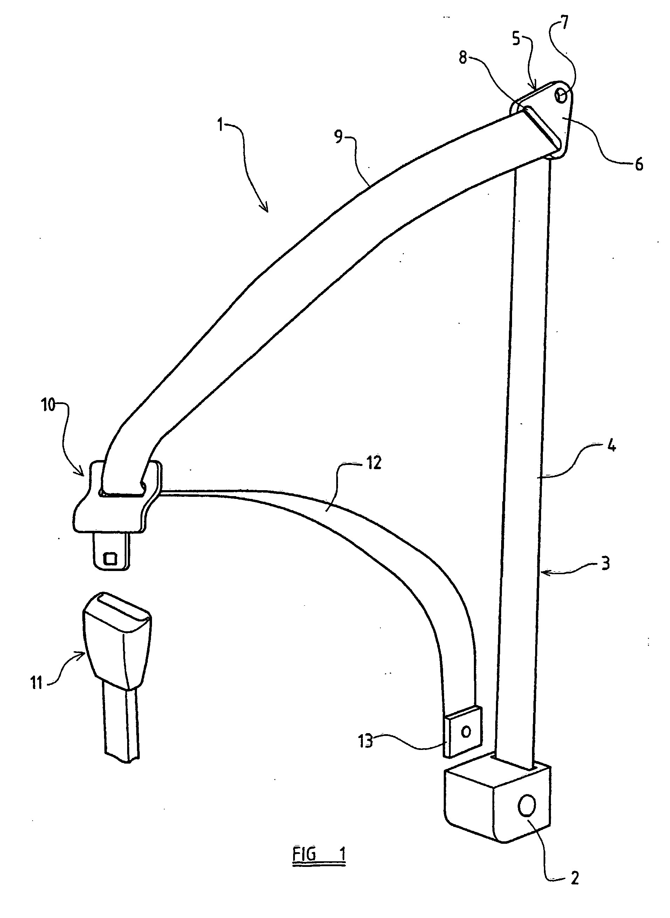

Referring initially to Figure 1 of the accompanying drawings, a safety-belt arrangement 1 is illustrated. The safety-belt arrangement 1 incorporates a retractor 2 which is floor-mounted at one side of a vehicle seat (not shown). A safety-belt 3 has one end wound on a spring-biased inertia reel within the retractor 2.

The safety-belt 3 incorporates a first portion 4 which extends substantially vertically upwardly from the retractor 2 to a pillar-loop deflector 5. The pillar-loop deflector 5 comprises a generally triangular plate 6 which is pivotally mounted by means of a pivot 7 to the structure (not shown) of the motor vehicle. The plate 6 defines a slot 8 through which the safety-belt passes.

A further portion 9 of safety-belt extends diagonally downwardly from the pillar-loop deflector 5, the portion 9 constituting the diagonal part of a lap-and-diagonal safety-belt. At the far end of the diagonal part 9 of the safety-belt is provided a tongue 10. The torque 10, in an initial condition, is freely slideable along the safety-belt. The structure of the tongue 10 will become clear from the following description.

The tongue 10 may be releasably received within a buckle 11 which may be mounted on the motor vehicle adjacent the seat (not shown). The buckle 11 is on the opposite side of the seat to the retractor 2.

A final portion 12 of safety-belt extends from the tongue 10 to a terminal anchorage 13. The anchorage 13 is connected to the vehicle adjacent the retractor 2. The final portion 12 of the safety-belt constitutes the lap part of the lap-and-diagonal safety-belt.

The safety-belt arrangement, as thus far described, is conventional but, it will be understood that the safety-belt arrangement of the present invention incorporates a specific design of tongue 10, the tongue incorporating a clamping element which, in certain circumstances, can move from a release position in which substantially unrestricted movement of the safety-belt through the tongue 10 is permitted, to a clamping position in which free movement of the safety-belt through the tongue 10 is prevented.

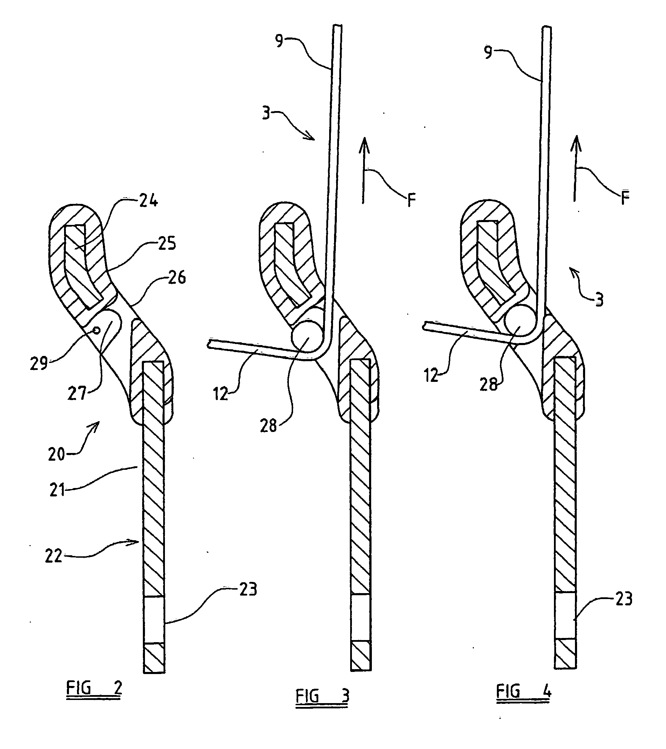

Referring now to Figure 2 of the accompanying drawings, one embodiment of a tongue 20 for use in the safety-belt arrangement of Figure 1 is illustrated. The tongue includes a metal plate 21 defining a planar extending region 22 which has an aperture 23 formed therein, the aperture being provided to engage with a locking element (not shown) provided within the buckle 11. The planar region 22 of the tongue may take one of many conventional shapes.

The upper part 24 of the metal plate is off-set from the region 22 with the aperture 23 and the upper part 24 and the region 22 with the aperture 23 is provided with a sheath 25 of plastics material. The combination of the upper part 24 and the plastics material sheath 25 define an open passage or throat 26 which extends through the tongue. It is to be understood that the safety-belt 3 passes through the throat 26 formed in the tongue and is free to slide through the throat 26 in ordinary use of the tongue. Thus the tongue can be located at an appropriate position along the safety-belt.

The throat 26 is of rectangular form when viewed from the front or from the rear of the tongue, having an upper wall, a lower wall and two side-edge-walls. The upper and lower walls converge. The throat is thus a converging throat which converges from one side of the tongue to the other side of the tongue.

The two opposed side-edge-walls of the throat 26 (only one of which is shown in Figure 2) are provided with co-aligned recesses 27 which extend from a relatively broad part of the throat 26 on one side of the tongue towards a relatively narrow part of the passage or throat 26 on the other side of the tongue.

Turning now to Figure 3, a cylindrical clamping element 28 is provided which extends initially across the relatively wide part of the throat 26, adjacent the upper wall of the throat, the clamping element having terminal parts thereof accommodated within the recesses 27 (see Figure 2) formed in the opposed side-edge-walls of the passage or throat 26. The diameter of the clamping element is slightly less than the width of the recesses 27. The clamping element 28 is initially held in position by frangible trunions which extend from opposed ends of the clamping element 28 and engage within bores 29 (see Figure 2) provided for that purpose in the recesses 27.

The trunions serve to retain the clamping element 28 in an initial or release position, as shown in Figure 3, in which the clamping element 28 is retained in position in the relatively wide section of the passage or throat 26. The safety-belt 3 can therefore easily pass around the clamping element 28 and through the throat 26, the safety-belt 3 being free to move readily through the throat in either direction.

The safety-belt 3 is threaded through the throat 26, the portion 9 of the safety-belt that is to form the diagonal part extending past the off-set upper part 24 of the metal plate, passing through the relatively narrow part of the throat 26n and then surrounding the clamping element 28 before forming the portion 12 that constitutes the lap part of the lap-and-diagonal safety-belt.

It is to be appreciated that with the components of the tongue in the position illustrated in Figure 3, the belt may move freely relative to the tongue, in either direction.

In an accident situation, however, it is envisaged that a significant force will be applied to the diagonal part 9 of the safety-belt as a consequence of the inertia of the seat occupant's torso. This will cause an upward force, as indicated by the arrow F to be applied to the safety-belt, and the force will be applied to the clamping element 28. This will cause the frangible trunions to break. The cylindrical clamping element 28 will then be drawn upwardly along the recesses 27 and will move towards the narrower part of the throat 26.

The diameter of the clamping element 28 is greater than the width of the narrowest part of the throat 26, and thus the clamping element 28 is moved to a clamping position as shown in Figure 4 in which the clamping element firmly clamps the safety-belt 3 against the lower wall of the throat. It can be seen that when the clamping element 28 is in the clamping position, as shown in Figure 4, the safety-belt 3 can no longer run freely through the throat 26. Any additional force applied to the diagonal part of the belt in the direction of the arrow F will only cause the clamping element to clamp the safety-belt more tightly.

Consequently it is envisaged that, in an accident situation, there will only be a minimum extension of the length of the diagonal part 9 of the safety-belt as a consequence of safety-belt passing through the throat 26 provided in the tongue.

Of course, during ordinary use of the safety-belt, the clamping effect will not be experienced.

It is to be appreciated that in some embodiments of the invention the safety-belt arrangement may be provided with a pretensioner, the pretensioner may act to pull the buckle 11 downwardly or may serve to wind-in part of the safety-belt 3 into the retractor 2. The pretensioner may, in some embodiments, apply a downward force to the terminal anchorage 13 of the final portion 12 of the safety-belt which forms the lap-part of the lap-and-diagonal safety-belt as shown in Figure 1.

In an embodiment provided with a pretensioner, especially if the pretensioner serves to pull down the buckle 11 or apply tension to the final portion 12 of the safety-belt, it may be desirable for the clamping element to be designed or located so that the clamping element will effect a clamping of the safety-belt in response to an increased force applied to the clamping element by the lap part 12 of the lap-and-diagonal safety-belt.

It is to be understood that in the embodiment of Figures 2 to 4, should tension be applied to the lap-part of the safety-belt, because of the configuration of the throat, with its converging characteristic, a substantial force applied to the lap part 12 of the safety-belt will cause the cylindrical clamping element 28 to move from the initial position to the clamping position, breaking the frangible trunions which hold the clamping element in position. Thus the embodiment of Figure 4 will effect a clamping of the safety-belt 3 in response to a substantial force present in either the diagonal part 9 of the safety-belt or in the lap-part 12 of the safety-belt.

It may, of course, be desirable to provide a clamping of the lap-part of the safety-belt in order to minimise a risk of submarining.

When used in this Specification and Claims, the terms "comprises" and "comprising" and variations thereof mean that the specified features, steps or integers are included. The terms are not to be interpreted to exclude the presence of other features, steps or components.

## Claims

1. A safety belt tongue (10) having a converging throat (26) extending therethrough, said throat (26) having an upper wall and a lower wall which converge and having two side walls, the safety belt tongue (10) including a clamping element (28) mounted within the throat (26) and defining between the clamping element (28) and one of said converging walls of the throat (26) a passage through which a safety belt (3) may pass, **characterised in that** the clamping element (28) is a substantially cylindrical element of a diameter greater than the least width of the converging throat (26), the ends of the clamping element (28) being guided in recesses (27) formed in said side walls, the clamping element (28) being held in a position in said throat (26) spaced from the part of the throat which is of least width by frangible trunnions received within bores (29) in the side walls of the throat (26) whereby, in normal use, with the clamping element (28) in said release position, such a safety belt (3) may pass freely through said passage, the cylindrical clamping element (28) being movable towards the part of least width of said converging throat (26) after fracture of said trunnions, so that the clamping element (28) engages the safety belt (3) and clamps the safety belt (3) against part of the throat (26) to prevent movement of the safety belt (3) through the throat (26).

2. A safety belt arrangement including a safety belt (3), a buckle (11) and a safety belt tongue (10) in accordance with Claim 1 configured for engagement with the buckle (11), said belt (3) passing between the clamping element (28) and one of said converging walls of said throat (26), the clamping element (28) being moveable by a force applied to the clamping element (28) by the belt (3) sufficient to break said frangible trunnions, to a clamping position in which the clamping element (28) engages the safety belt (3) and clamps the safety belt (3) against said wall of the throat (26) to prevent movement of the safety belt (3) through the throat (26).

3. A safety belt arrangement (1) according to Claim 2 in the form of a lap-and-diagonal safety-belt arrangement (1), the tongue (10) being oriented so that a predetermined force applied to the diagonal part of the safety belt arrangement (1) will apply a force to the clamping element (28) moving the clamping element (28) to the clamping position.

4. A safety belt arrangement according to Claim 2 in the form of a lap-and-diagonal safety-belt arrangement, the tongue (10) being oriented so that a predetermined force applied to the lap part (12) of the safety belt arrangement (1) will apply a force to the clamping element (28) which will, if of sufficient magnitude, fracture said trunnions and move the clamping element (28) to the clamping position.

## Patentansprüche

1. Sicherheitsgurtschlosszunge (10) mit einer zusammenlaufenden Verengung (26), die sich dort hindurch erstreckt, wobei die Verengung (26) eine obere Wand und eine untere Wand, die zusammenlaufen, und zwei Seitenwände aufweist, wobei die Sicherheitsgurtschlosszunge (10) ein Klammerelement (28) umfasst, das in der Verengung (26) befestigt ist und zwischen dem Klammerelement (28) und einer der zusammenlaufenden Wände der Verengung (26) einen Durchgang abgrenzt, durch den ein Sicherheitsgurt (3) hindurchgeführt werden kann, **dadurch gekennzeichnet, dass** das Klammerelement (28) ein im Wesentlichen zylindrisches Element mit einem Durchmesser ist, der größer ist als die kleinste Breite der zusammenlaufenden Verengung (26), wobei die Enden des Klammerelements (28) in Vertiefungen (27) geführt werden, die in den Seitenwänden gebildet sind, und das Klammerelement (28) durch zerbrechliche Achszapfen, die in Bohrungen (29) in den Seitenwänden der Verengung (26) aufgenommen werden, in einer Position in der Verengung (26) gehalten wird, die von dem Teil der Verengung beabstandet ist, der die kleinste Breite aufweist, wodurch ein solcher Sicherheitsgurt (3) bei normalem Gebrauch und während sich das Klammerelement (28) in der Löseposition befindet frei durch den Durchgang laufen kann, wobei das zylindrische Klammerelement (28) in Richtung des Teils der zusammenlaufenden Verengung (26) mit der kleinsten Breite nach dem Zerbrechen der Achszapfen beweglich ist, so dass das Klammerelement (28) in den Sicherheitsgurt (3) eingreift und den Sicherheitsgurt (3) an einem Teil der Verengung (26) festklemmt, um eine Bewegung des Sicherheitsgurtes (3) durch die Verengung (26) zu verhindern.

2. Sicherheitsgurtanordnung, die einen Sicherheitsgurt (3), ein Schloss (11) und eine Sicherheitsgurtschlosszunge (10) umfasst, nach Anspruch 1, die zum Eingriff in das Schloss (11) konfiguriert ist, wobei der Gurt (3) zwischen dem Klammerelement (28) und einer der zusammenlaufenden Wände der Verengung (26) hindurchgeführt wird und das Klammerelement (28) durch eine Kraft, die von dem Gurt (3) auf das Klammerelement (28) ausgeübt wird und ausreicht, um die zerbrechlichen Achszapfen zu zerbrechen, in eine Klammerposition bewegt werden kann, in der das Klammerelement (28) in den Sicherheitsgurt (3) eingreift und den Sicherheitsgurt (3) an der Wand der Verengung (26) festklemmt, um eine Bewegung des Sicherheitsgurtes (3) durch die Verengung (26) zu verhindern.

3. Sicherheitsgurtanordnung (1) nach Anspruch 2 in Form einer Schoß-Diagonal-Sicherheitsgurtanordnung (1), wobei die Schlosszunge (10) so ausgerichtet ist, dass eine vorherbestimmte Kraft, die auf den diagonalen Teil der Sicherheitsgurtanordnung (1) ausgeübt wird, eine Kraft auf das Klammerelement (28) ausübt, die das Klammerelement (28) in die Klammerposition bewegt.

4. Sicherheitsgurtanordnung nach Anspruch 2 in Form einer Schoß-Diagonal-Sicherheitsgurtanordnung (1), wobei die Schlosszunge (10) so ausgerichtet ist, dass eine vorherbestimmte Kraft, die auf den Schoßteil (12) der Sicherheitsgurtanordnung (1) ausgeübt wird, eine Kraft auf das Klammerelement (28) ausübt, die, wenn sie ausreichend groß ist, die Achszapfen zerbricht und das Klammerelement (28) in die Klammerposition bewegt.

## Revendications

1. Une languette de ceinture de sécurité (10) ayant une gorge convergente (26) s'étendant à travers elle, ladite gorge (26) ayant une paroi supérieure et une paroi inférieure qui convergent et ayant deux parois latérales, la languette de ceinture de sécurité (10) comprenant un élément de fixation (28) monté à l'intérieur de la gorge (26) et définissant entre l'élément de fixation (28) et l'une desdites parois convergentes de la gorge (26) un passage à travers lequel une ceinture de sécurité (3) peut passer, **caractérisée en ce que** l'élément de fixation (28) est un élément essentiellement cylindrique d'un diamètre supérieur à la largeur la plus petite de la gorge convergente (26), les extrémités de l'élément de fixation (28) étant guidées dans des creux (27) formés dans lesdites parois latérales, l'élément de fixation (28) étant maintenu dans une position dans ladite gorge (26) espacée de la partie de la gorge qui est de la largeur la plus petite par des tourillons frangibles reçus à l'intérieur d'alésages (29) dans les parois latérales de la gorge (26) grâce à quoi, dans une utilisation normale, avec l'élément de fixation (28) dans ladite position de libération, une ceinture de sécurité de la sorte (3) peut passer librement à travers ledit passage, l'élément de fixation cylindrique (28) pouvant être déplacé vers la partie de la largeur la plus petite de ladite gorge convergente (26) après fracture desdits tourillons, de sorte que l'élément de fixation (28) se mette en prise avec la ceinture de sécurité (3) et fixe la ceinture de sécurité (3) contre une partie de la gorge (26) pour empêcher un déplacement de la ceinture de sécurité (3) à travers la gorge (26).

2. Un agencement de ceinture de sécurité comprenant une ceinture de sécurité (3), une boucle (11) et une languette de ceinture de sécurité (10) conformément à la revendication 1 configurée pour se mettre en prise avec la boucle (11), ladite ceinture (3) passant entre l'élément de fixation (28) et l'une desdites parois convergentes de ladite gorge (26), l'élément de fixation (28) pouvant être déplacé par une force appliquée à l'élément de fixation (28) par la ceinture (3) suffisante pour casser lesdits tourillons frangibles, dans une position de fixation dans laquelle l'élément de fixation (28) se met en prise avec la ceinture de sécurité (3) et fixe la ceinture de sécurité (3) contre ladite paroi de la gorge (26) pour empêcher un déplacement de la ceinture de sécurité (3) à travers la gorge (26).

3. Un agencement de ceinture de sécurité (1) selon la revendication 2 sous la forme d'un agencement de ceinture de sécurité ventrale et diagonale (1), la languette (10) étant orientée de sorte qu'une force prédéterminée appliquée à la partie diagonale de l'agencement de ceinture de sécurité (1) appliquera une force à l'élément de fixation (28) déplaçant l'élément de fixation (28) dans la position de fixation.

4. Un agencement de ceinture de sécurité selon la revendication 2 sous la forme d'un agencement de ceinture de sécurité ventrale et diagonale, la languette (10) étant orientée de sorte qu'une force prédéterminée appliquée à la partie ventrale (12) de l'agencement de ceinture de sécurité (1) appliquera une force à l'élément de fixation (28) qui, si elle est de magnitude suffisante, fracturera lesdits tourillons et déplacera l'élément de fixation (28) dans la position de fixation.
